## Europäisches Patentamt
## European Patent Office
## Office européen des brevets

(19)

(11) Veröffentlichungsnummer: **0 074 017**

**A2**

(12) **EUROPÄISCHE PATENTANMELDUNG**

(21) Anmeldenummer: **82107777.3**

(22) Anmeldetag: **25.08.82**

(51) Int. Cl.³: **G 01 B 11/26**

(30) Priorität: **03.09.81 DE 3134830**

(43) Veröffentlichungstag der Anmeldung:
**16.03.83 Patentblatt 83/11**

(84) Benannte Vertragsstaaten:
**AT CH DE FR GB IT LI**

(71) Anmelder: **MPE Produkt Plan AG**
**Hohlstrasse 216**
**CH-8004 Zürich(CH)**

(72) Erfinder: **Siegfried, Armin**
**Im Aegelsee 2**
**CH-8103 Unterengstringen(CH)**

(72) Erfinder: **Selbach, Gerd, Prof. Dipl.-Ing.**
**Taubenstrasse 18**
**D-4006 Erkrath 1(DE)**

(74) Vertreter: **Lempert, Jost, Dr.rer.nat. et al,**
**Patentanwälte Dr. Ing. Hans Lichti Dipl.-Ing. Heiner**
**Lichti Dipl.-Phys. Dr.rer.nat. Jost Lempert Durlacher**
**Strasse 31 Postfach 410760**
**D-7500 Karlsruhe 41(DE)**

(54) **Verfahren und Vorrichtung zum Richten und Prüfen von Werkstücken od.dgl.**

(57) Es handelt sich um eine Vorrichtung zum Richten und Prüfen von Werkstücken, insbesondere in einer Bearbeitungsmaschine, wie Dreh- und Fräsmaschine. Eine derartige Vorrichtung dient dazu, Werkstücke auszurichten, so daß ein vorgesehener Bearbeitungsvorgang in der gewünschten Weise vorgenommen werden kann. Mittels einer solchen Vorrichtung kann auch nachträglich geprüft werden, ob beispielsweise eine bearbeitete Fläche in der gewünschten Weise bearbeitet wurde. Bisher ist ein solches Ein- und Ausrichten von Werkstücken aufwendig, so daß angestrebt wird, das Richten von Werkstücken zu vereinfachen und zeitlich zu verkürzen. Hierzu wird eine gattungsgemäße Vorrichtung ausgestaltet durch ein kompaktes Richtgerät (10) mit mindestens einer äußeren Bezugsfläche (16, 18) mit mindestens einer einen scharf gebündelten Meßstrahl (42, 44) erzeugenden Beleuchtungsanordnung (24) mit einer Lichtquelle (26), deren Strahlrichtung (36) eine vorbestimmte Ausrichtung relativ zu den Bezugsflächen (16, 18) aufweist, wobei der Meßstrahl (42, 44) senkrecht zu seiner Strahlrichtung (36) durch mindestens zwei Vorzugsrichtungen strukturiert ist, und mit entsprechend den Vorzugsrichtungen angeordneten Meßelementen (52, 54) und durch mindestens eine an Meßflächen (41) des Werkstücks angeordnete Reflektionsflächen (46) zum Reflektieren des Meßstrahls (42, 44).

FIG.1

Verfahren und Vorrichtung zum Richten und Prüfen von Werkstücken od.dgl.

Die Erfindung betrifft ein Verfahren zum Richten und Prüfen von Werkstücken od. dgl., insbesondere in einer Bearbeitungsmaschine, wie Dreh-
und Fräsmaschinen od. dgl., wobei mindestens ein Lichtstrahl auf eine
Fläche eines Werkstücks gerichtet und von dieser direkt oder durch eine
mit diesem verbundenen Reflektor reflektiert wird, sowie eine entsprechende Vorrichtung, insbesondere zur Durchführung des Verfahrens.

Eine spezielle derartige Meßvorrichtung ist in der DE-OS 25 48 135 beschrieben. Die dortige Vorrichtung dient zur Ausmessung von Keilwinkeln
in der Fertigung von Flachkeilpassungen. Bei dieser Vorrichtung wird ein
gestrecktes Lichtsignal in ein System versetzt angeordneter Prismen eingegeben und über reflektierende Meßebenen, welche den Flächen des
Keiles zugeordnet sind, reflektiert und auf einer Projektionsebene abgebildet, wo dann die Vermessung vorgenommen werden kann.

Die bekannte Vorrichtung bedingt nicht nur ein kompliziertes Vorgehen, sondern ist auch konstruktiv aufwendig und erfordert insbesondere einen hohen konstruktiven Aufwand und große Abmessungen, so daß ein Einsatz der bekannten Vorrichtung äußerst unpraktisch ist und bestenfalls im Labor, nicht aber in der Fertigung selbst vorgenommen werden kann.

Der Erfindung liegt daher die Aufgabe zugrunde, ein gattungsgemäßes Verfahren und eine Vorrichtung zu schaffen, die das Ein- und Ausrichten von Werkstücken, insbesondere großer Werkstücke in der Einzelherstellung sowie bei Klein- und Mittelsierien direkt in der Fertigung verkürzen und vereinfachen.

Erfindungsgemäß wird die genannte Aufgabe zunächst durch ein Verfahren gelöst, das dadurch gekennzeichnet ist, daß ein erster Lichtstrahl senkrecht zu einer Strahlrichtung durch mindestens zwei Vorzugsrichtungen strukturiert wird. Eine erfindungsgemäße Vorrichtung sieht die Lösung der genannten Aufgabe vor, durch ein kompaktes Richtgerät mit mindestens einer äußeren Bezugsfläche mit mindestens einer einen scharf gebündelten Meßstrahl erzeugenden Beleuchtungsanordnung mit einer Lichtquelle, deren Strahlrichtung eine vorbestimmte Ausrichtung relativ zu den Bezugsflächen aufweist, wobei der Meßstrahl senkrecht zu seiner Strahlrichtung durch mindestens zwei Vorzugsrichtungen strukturiert ist, und mit entsprechend den Vorzugsrichtungen angeordneten Meßelementen und durch mindestens eine an Meßflächen des Werkstücks angeordnete Reflektionsflächen zum Reflektieren des vom Richtgerät ausgesandten Meßstrahls.

Das erfindungsgemäße Verfahren und die Vorrichtung weisen zunächst den Vorteil eines Ausrichtens von Werkstückflächen mit hoher Genauigkeit unter vorgegebenen Vorzugswinkeln, insbesondere senkrecht und/oder parallel zu einer äußeren Bezugsrichtung oder -fläche, wie der Bearbeitungsachse einer Bearbeitungsmaschine, oder eine Meßtischauflage od. dgl. auf. In bevorzugter Ausgestaltung kann als Lichtquelle ein Laser eingesetzt werden. Zur Strukturierung der ausgesandten Lichtstrahlen können in geeigneter Weise mit ihren Ausgängen angeordnete Lichtfasern vorgesehen sein. Gemäß einer bevorzugten Ausführungsform des Verfahrens ist allerdings vorgesehen, daß die Lichtflächen durch einen sie mit hoher Geschwindigkeit überstreichenden, eng gebündelten Lichtstrahl erzeugt werden. Zur Durchführung dieser Verfahrensausgestaltung ist eine Vorrichtung vorgesehen, die sich dadurch auszeichnet, daß im Meßgerät im Lichtweg des Lasers mit Neigung zum Strahl des Lasers ein drehbarer Spiegel angeordnet ist, dessen Drehachse mit dem Strahl zusammenfällt, daß der Spiegel mit einem Motor verbunden ist und daß um den Spiegel mindestens ein weiterer Spiegel angeordnet ist, der den durch den bewegten Spiegel umlaufenden Lichtstrahl in mindestens einer Lichtfläche aus dem Gerät heraus reflektiert. Insgesamt wird also Licht ausgestrahlt, das senkrecht zur eigentlichen Strahlrichtung mindestens zwei, vorzugsweise auch zueinander senkrecht stehende Vorzugsrichtungen besitzt, also auf eine Auftrefffläche ein Kreuz abbildet, sei es daß die Lichtflächen seitlich konstant sind, sei es daß sie mittels eines überstreichenden, eng begrenzten Lichtstrahls gebildet werden.

Das Ausrichtungen der erfindungsgemäßen Vorrichtung geschieht nun derart, daß der erzeugte und entlang einer Vorzugsrichtung ausgestrahlte Meßstrahl von der Werkstückoberfläche - soweit sie selbst spiegelnd ist - bzw. einen am Werkstück auf - oder angesetzten Reflektor reflektiert wird. Der reflektierte Strahl kann dann mittels Meßelementen an der Vorrichtung abgelesen oder festgestellt werden. Als Meßelemente können entweder Meßmarken vorgesehen sein, wobei dann abgelesen wird, an welcher Stelle der reflektierte Strahl jeweils auftrifft. Es können aber auch Fotodetektoren vorgesehen werden, die dann über eine Elektronik das Auftreffen des reflektierten Strahles anzeigen. Vorzugsweise wird dabei die Vorrichtung so ausgestaltet, daß der Meßstrahl in sich reflektiert und dann durch eine Empfängeranordnung aufgenommen wird. Dabei sind dann Fotodetektoren bei einem fadenkreuzartigen Meßstrahl in optischer Hinsicht in entsprechender Erstreckung der Schenkel des Fadenkreuzes angeordnet. Ist der Meßstrahl vollständig parallelisiert, beispielsweise durch eine geeignete Abbildungsanordnung, so fällt auch das reflektierte Licht bei gewünschter Ausrichtung wieder genau in die fadenkreuzartige Blende zurück; hier können selbstverständlich keine Empfängerdetektoren angeordnet werden. In diesem Falle ist es sinnvoll in der Abbildungsanordnung halbdurchlässige Spiegel vorzusehen, so daß beispielsweise der reflektierte Strahl zumindest teilweise abgelenkt wird und in einer optisch der fadenkreuzartigen Blende entsprechenden Ausrichtung, aber selbstverständlich an einem anderen geometrischen Ort die Fotodetektoren angeordnet werden können.

Gemäß einer bevorzugten Ausgestaltung ist aber vorgesehen, daß die Meßstrahlen in durch Strahlrichtung und Vorzugsrichtung definierte Lichtflächen leicht divergent verlaufen, ansonsten, insbesondere senkrecht zu den Lichtflächen im wesentlichen parallelisiert sind, wobei diese Ausgestaltung insbesondere dadurch weitergebildet ist, daß gestreckte, stabförmige Linsen vorgesehen sind, die mit ihrer Längserstreckung entlang der Vorzugsrichtung im Strahlengang angeordnet sind und senkrecht zur Erstreckung eine Parallelisierung des Lichtstrahls bewirken, aber in ihrer Erstreckungsrichtung eine Divergenz des Lichtstrahls erhalten oder diesen weitgehend unabgelenkt weiterleiten. Bei diesen Ausgestaltungen können Detektoren beispielsweise in der Verlängerung der Schenkel der fadenkreuzartigen Blende angeordnet werden. Während es ausreicht, nur diese Detektoren anzuordnen, können in bevorzugter Ausgestaltung aber auch Reihen von Detektoren angeordnet werden, wodurch dann festgestellt werden kann, in welcher Größenordnung eine weitere Ausrichtung des zu bearbeitenden Werkstückes erforderlich ist.

Die erfindungsgemäße Vorrichtung kann mit ihrem Richtgerät in einem kompakten Gehäuse untergebracht und mittels dieses leicht an Werkzeugmaschinen angeordnet bzw. befestigt werden. Demgemäß ist entsprechend einer bevorzugten Ausgestaltung vorgesehen, daß die

Bezugsflächen durch Außenwände eines Gehäuses gebildet sind. Sobald mehrere Außenwände oder Bezugsflächen vorgesehen sind, stehen diese zueinander senkrecht. Zur Befestigung sind, soweit keine einfache Auflage vorgesehen ist, Befestigungsmittel vorgesehen, beispielsweise Magnete oder mechanische Befestigungsmittel herkömmlicher Art. Eine bevorzugte Ausgestaltung für die Anbringung an vielen Bearbeitungsmaschinen ist ein Zapfen, der dann in einer Spindel der Bearbeitungsmaschine festgespannt werden kann.

0074017

Soll das erfindungsgemäße Verfahren und die erfindungsgemäße Vorrichtung zur Ausrichtung eines Werkstückes bzw. einer Werkstückoberfläche unter variablen Winkeln eingesetzt werden, so ist zunächst eine bevorzugte Ausgestaltung des erfindungsgemäßen Verfahrens dadurch gekennzeichnet, daß ein zweiter Lichtstrahl von einem zum ersten Lichtstrahl entfernt liegenden Ort unter einer senkrecht zu einer Vorzugsrichtung des ersten Lichtstrahls und schräg zu diesem hin gerichteten Strahlrichtung gestrahlt wird.

Die erfindungsgemäße Vorrichtung zur Ausrichtung eines Werkstückes bzw. einer Werkstückoberfläche unter variablen Winkeln zur Strahlrichtung des Meßstrahles ist in bevorzugter Weiterbildung ausgestaltet durch eine weitere, in räumlichem Abstand zur ersten angeordneten Beleuchtungsanordnung, mittels der ein Strahl unter einem endlichen Winkel zum Richtstrahl hin gerichtet wird, wobei insbesondere zusätzliche Fotodetektoren zwischen erster und zweiter Beleuchtungsanordnung vorgesehen sind. Dieser weitere Strahl der zusätzlichen Beleuchtungsanordnung dient zunächst zum Einstellen des Abstandes des Richtgerätes zur Reflektionsfläche. Ein solcher Einstellhilfsstrahl ist erforderlich, da am Meßgerät zunächst nur absolute Abstände zwischen ausgesandtem Meßstrahl und reflektiertem Strahl abgelesen oder mittels Detektoren festgestellt werden können und bestenfalls bei vorweg bestimmtem Abstand eine gebogene Skala in Einheiten der Winkelablenkung geeicht sein kann. Die Marken oder einzelnen Detektoren können nur dann vorgegebenen Winkeln zugeordnet werden, wenn der Abstand des Meßgerätes zur Reflektionsfläche konstant ist. Hierzu dient der Einstellhilfsstrahl, der unter einem festen Winkel zum Meßstrahl hin gerichtet ist. Die Entfernungseinstellung wird so vorgenommen, daß Meßstrahl und Hilfsstrahl in einem gemeinsamen Punkt bzw. einer gemeinsamen Linie auf der Reflektor-fläche auftreffen. In bevorzugter Ausgestaltung kann vorgesehen sein, daß die Vorzugsrichtungen zueinander senkrecht ausgerichtet sind. In diesem Falle reicht eine bzw. ein Paar von Lichtempfängern aus. Beim Auftreffen von Licht auf die Empfänger wird dies angezeigt. Gleichzeitig kann die Stellung der Empfänger an einer Skala abgegeben werden oder wird ebenfalls angezeigt, beispielsweise über mechanische oder elektronische Kontaktanordnungen.

Der Hilfsstrahl kann von einer separaten Lichtquelle ausgesandt werden. Gemäß einer bevorzugten Ausgestaltung ist aber vorgesehen, daß die Beleuchtungsanordnung eine optische Umlenkeinrichtung aufweist, mittels der ein Teil des Lichtes der Ausgangslichtquelle abgelenkt wird, wobei die Abbildungsoptik Lichtleiter, Spiegel oder Prismen aufweisen kann.

Ist als bevorzugte Weiterbildung vorgesehen, daß der zweite Lichtstrahl ebenfalls eine parallel zur genannten Vorzugsrichtung sich erstreckende Vorzugsrichtung aufweist, wobei auch der eigentliche Meßstrahl durch zwei sich entlang der Strahlrichtung schneidende Lichtflächen gebildet wird, dessen Ausrichtung insbesondere zueinander senkrecht steht, so kann das erfindungsgemäße Verfahren auch zur Messung und Prüfung von Parallelitäten von Kanten von Werkstücken od. dgl. in vorteilhafter Weise eingesetzt werden, wie im weiteren noch erläutert wird.

Gemäß einer bevorzugten Ausgestaltung ist vorgesehen, daß der Strahl ebenfalls eine Vorzugsrichtung senkrecht zu seiner Strahlrichtung aufweist, und daß die Vorzugsrichtung sich parallel zu einer Vorzugsrichtung des Meßstrahls erstreckt. In dieser Ausführungsform ist die erfindungsgemäße Vorrichtung zur Messung und Kontrolle von Parallelitäten, wie von Zahnflanken bzw. der zylindrischen oder tonnenförmigen Ausgestaltungen von Walzen, großen Wellen oder anderen Werkstücken, aber auch zur

**0074017**

Prüfung eines parallelen Ausrichters in Fabrikation und Montage einsetzbar.

Während die Beleuchtungsanordnung zur Erzeugung des Hilfsstrahles prinzipiell im gleichen Gehäuse untergebracht werden kann, wie die Ausgangsvorrichtung, so ist gemäß bevorzugter Ausgestaltung doch vorgesehen, daß die zusätzliche Beleuchtungsanordnung gegebenenfalls mit zusätzlichen Fotodetektoren in einem entfernbaren Zusatzteil des Richtgerätes angeordnet ist. Während, wie gesagt, der Reflektor direkt als spiegelnde Fläche eines Werkstückes vorgesehen sein kann, wird die Oberfläche eines Werkstückes oft nicht ausreichend spiegeln. In diesem Falle zeichnet sich dann eine bevorzugte Ausgestaltung aus, durch einen separat ansetzbaren Reflektoradapter. Der Spiegel kann in seinem Umfangsbereich mit Mattzonen versehen sein, die eine Feststellung des Auftreffens des Meßstrahles und des Hilfsstrahles auf dem Spiegel erleichtern und insbesondere die Übereinstimmung des Auftreffpunktes zur Entfernungseinstellung wesentlich leichter möglich machen, als dies bei einer reinspiegelnden Fläche der Fall ist. Allerdings könnte der aufgesetzte Spiegel auch so klein gewählt werden, daß zur Feststellung der richtig eingestellten Entfernung direkt die nichtspiegelnde Oberfläche des Werkstückes genommen werden kann, wobei dann allerdings eine Ungenauigkeit im Hinblick auf die Dicke des Spiegeladapters in Kauf zu nehmen wäre, die allerdings auch direkt bei der Eichung der Vorrichtung berücksichtigt werden könnte.

Weitere Vorteile und Merkmale der Erfindung ergeben sich aus den Ansprüchen und aus der nachfolgenden Beschreibung, in der Ausführungsbeispiele der Erfindung anhand der Zeichnung im einzelnen erläutert sind. Dabei zeigt:

Figur 1        eine erste Ausführungsform der erfindungsgemäßen Vorrichtung in Seitenansicht und
               teilweise geschnitten entlang I - I der Fig. 3;

Figur 2        . eine Sicht auf ein auszurichtendes Werkstück
               in Richtung des Pfeiles II der Fig. 1;

Figur 3        eine Sicht von unten auf eine Ausführungsform eines Meßgerätes der erfindungsgemäßen
               Vorrichtung in Richtung des Pfeiles III
               der Fig. 1;

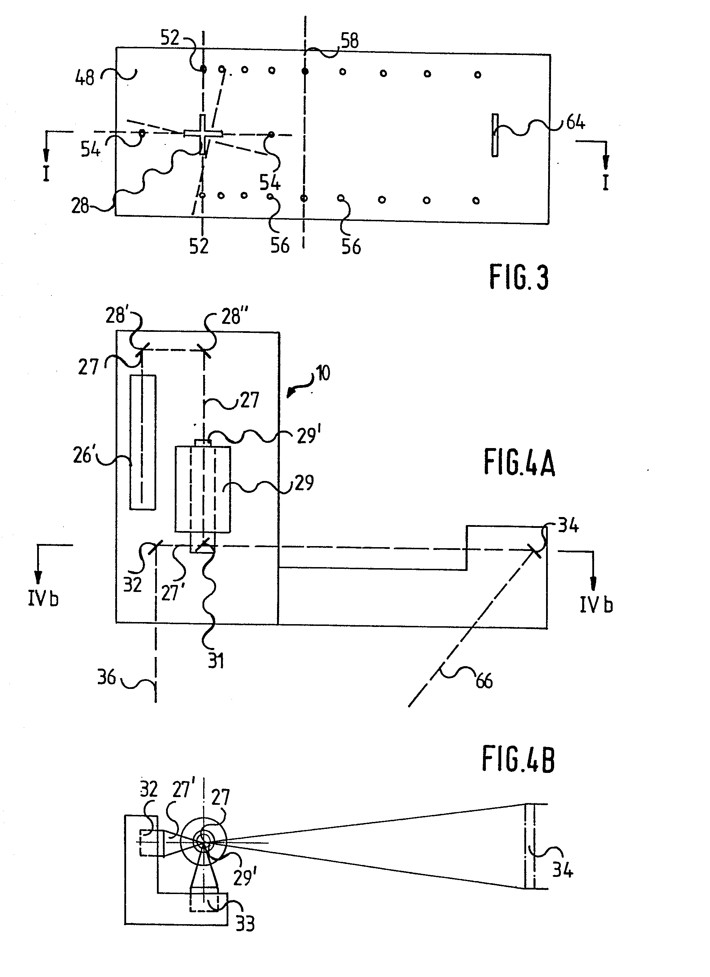

Figur 4        eine schematische Darstellung des inneren Aufbaus des Meßgerätes mit einer Ausführungsform
               zur Erzeugung der Lichtflächen, wobei Fig. 4a
               eine Seitenansicht und Fig. 4b) einen Schnitt
               entlang der Linie IVb - IVb zeigt;.

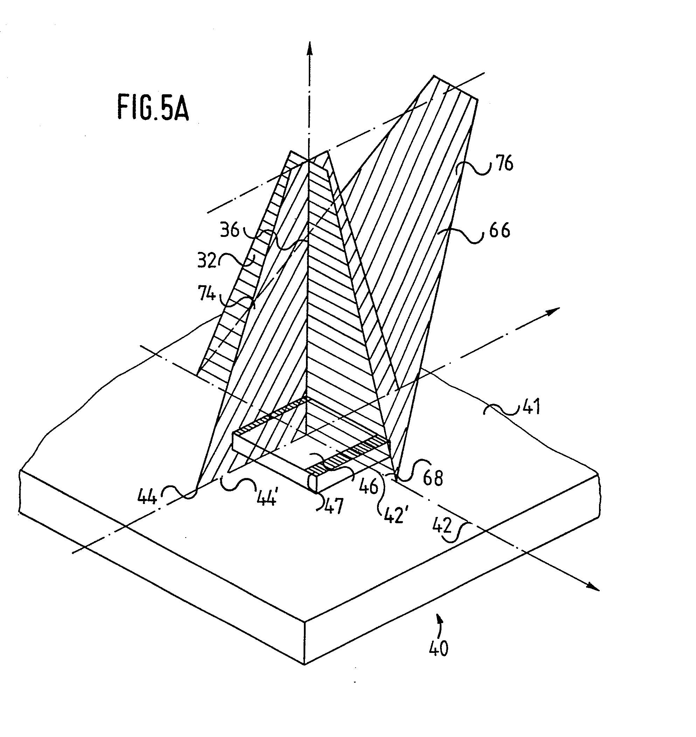

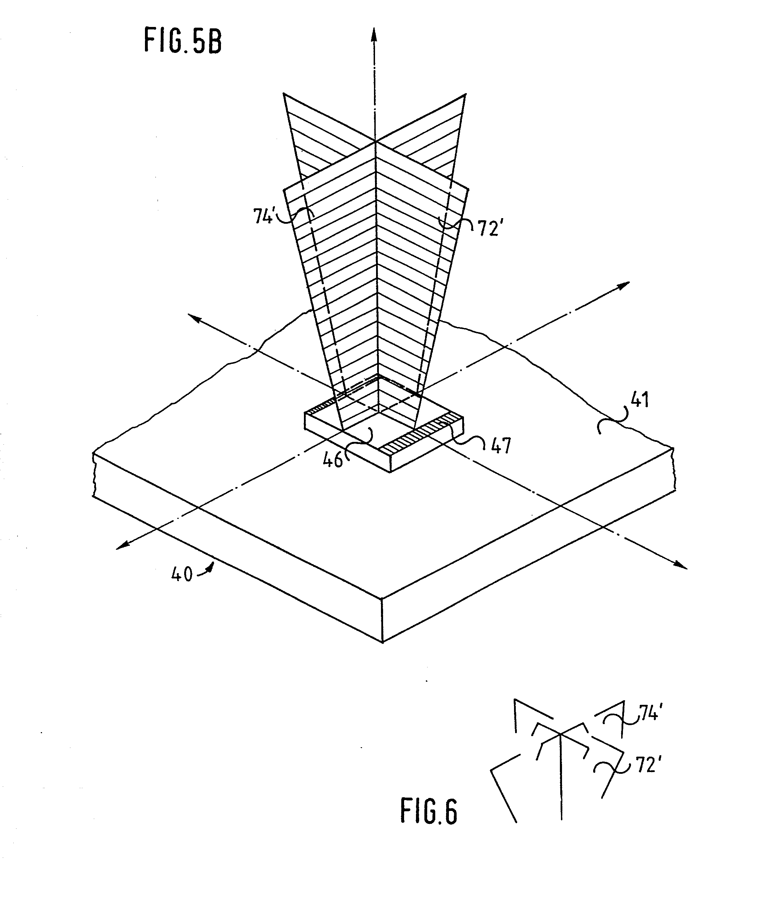

Figur 5        die prinzipielle Arbeitsweise einer erfindungsgemäßen Meßvorrichtung nach den vorstehenden
               Figuren;

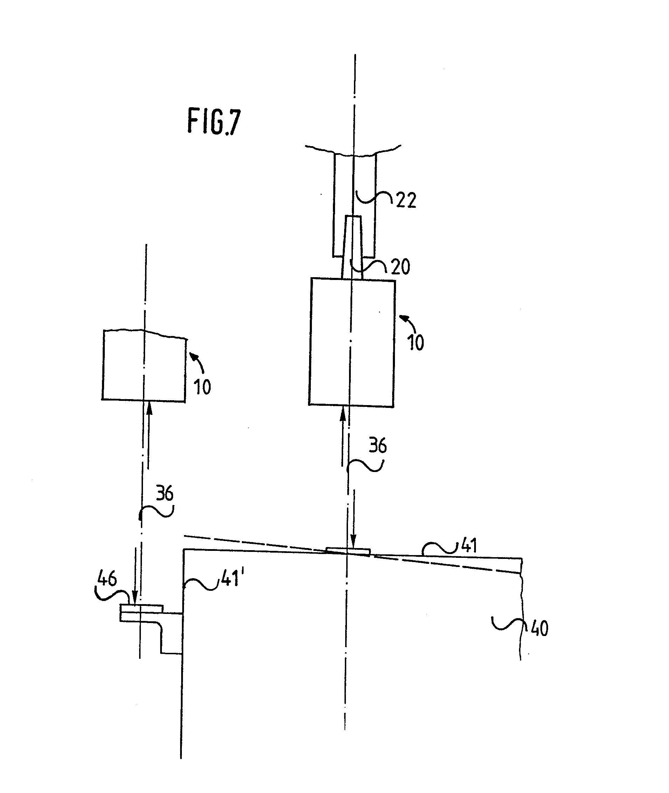

Figur 6        eine Darstellung des Strahlenverlaufs entsprechend
               Fig. 5b) bei nicht ausgerichtetem Werkstück unmittelbar unterhalb des Meßgerätes;

Figur 7        eine Ausführungsform der erfindungsgemäßen
               Meßvorrichtung in Seitenansicht bei einer Bearbeitungsmaschine;

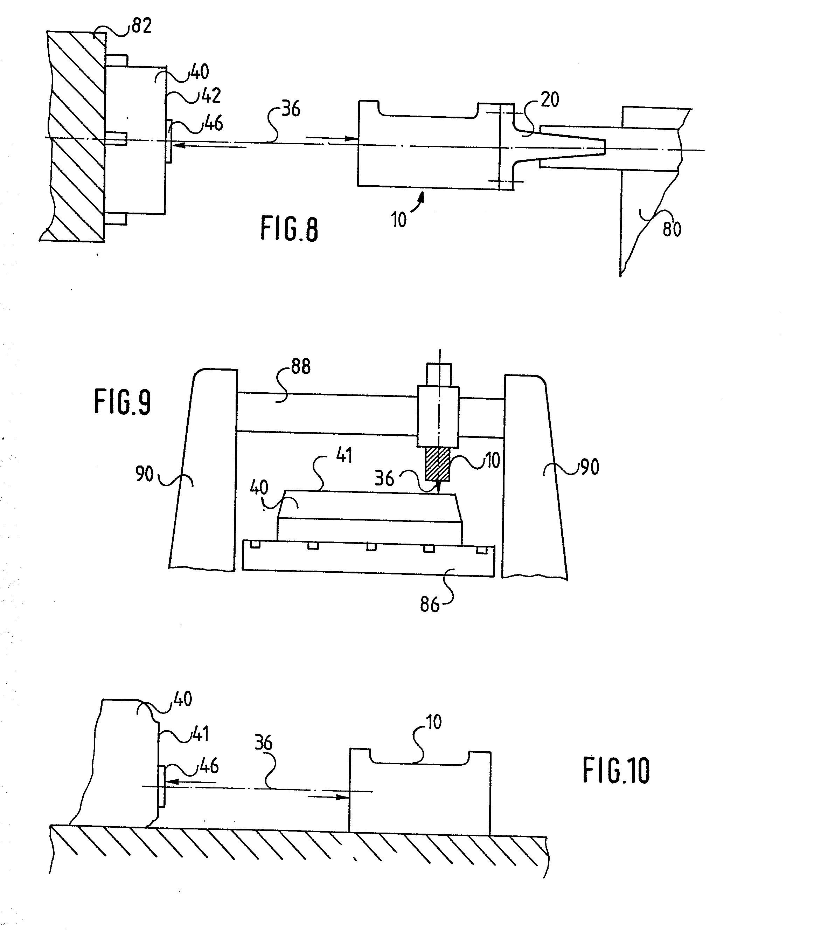

Figur 8          eine Seitenansicht zum Einsatz der erfindungsgemäßen Vorrichtung in einer Drehmaschine;

Figur 9          eine Ausführungsform der erfindungsgemäßen
                 Meßvorrichtung an einer Karusselldrehmaschine;

Figur 10         eine Darstellung zum Einsatz der erfindungsgemäßen Meßvorrichtung bei der Kontrolle
                 eines Werkstückes;

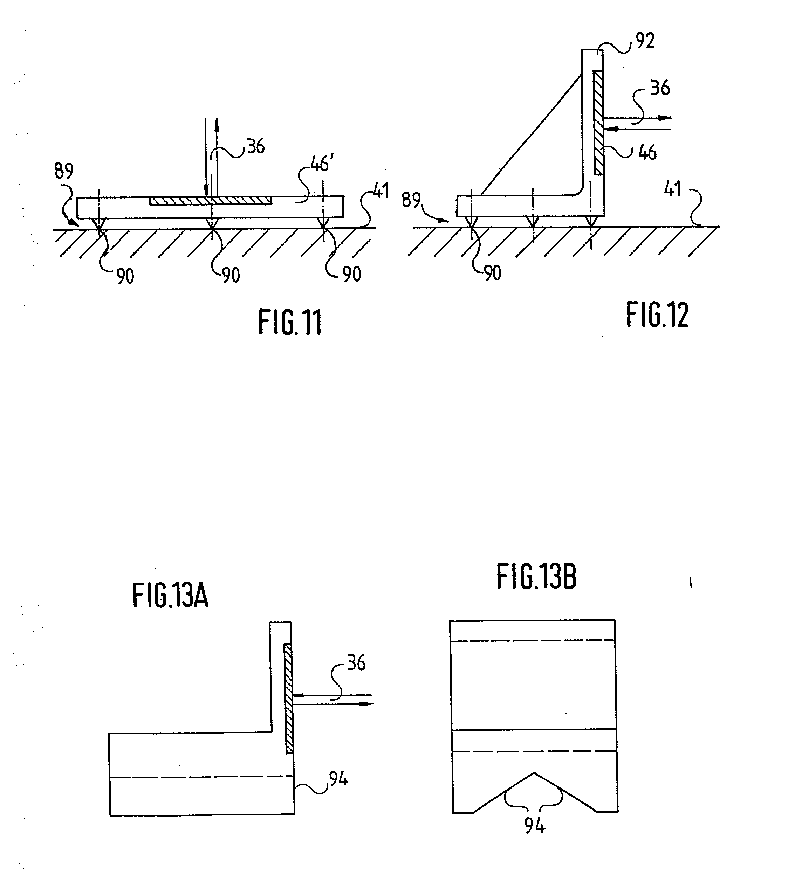

Figur 11         eine Ausführungsform eines Reflektoradapters
                 zum Aufsatz auf eine Werkstückfläche;

Figur 12         eine andere Ausführungsform eines Spiegeladapters der erfindungsgemäßen Meßvorrichtung
                 zur Parallelausrichtung einer Werkstückfläche;

Figur 13         eine weitere Ausführungsform des Reflektoradapters mit einer Prismenhalterung;

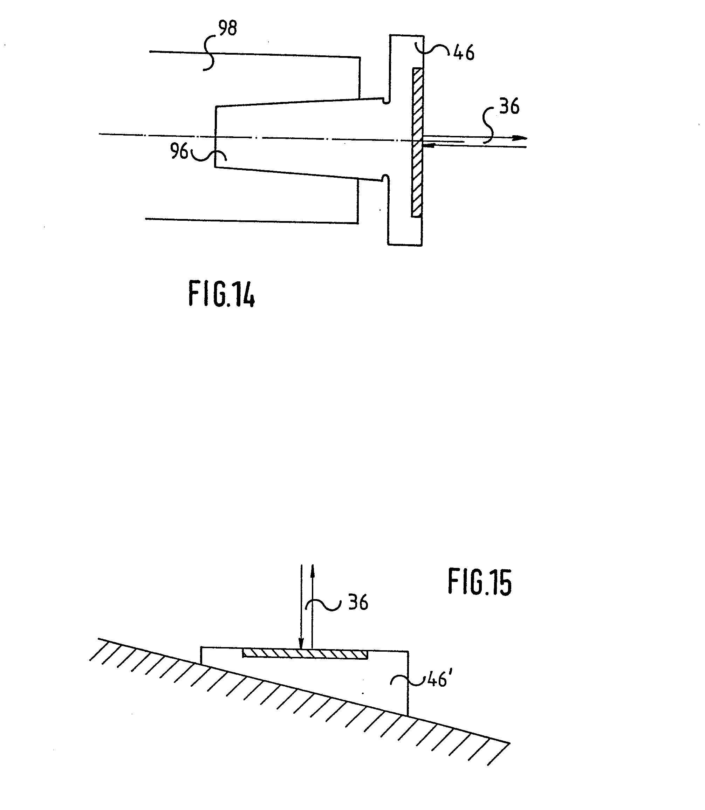

Figur 14         eine Ausführungsform des Reflektoradapters
                 mit einem konischen Zapfen zum Einsatz in
                 einer Spindel; und

Figur 15         ein als kalibrierter Keil ausgebildeter
                 Reflektoradapter.

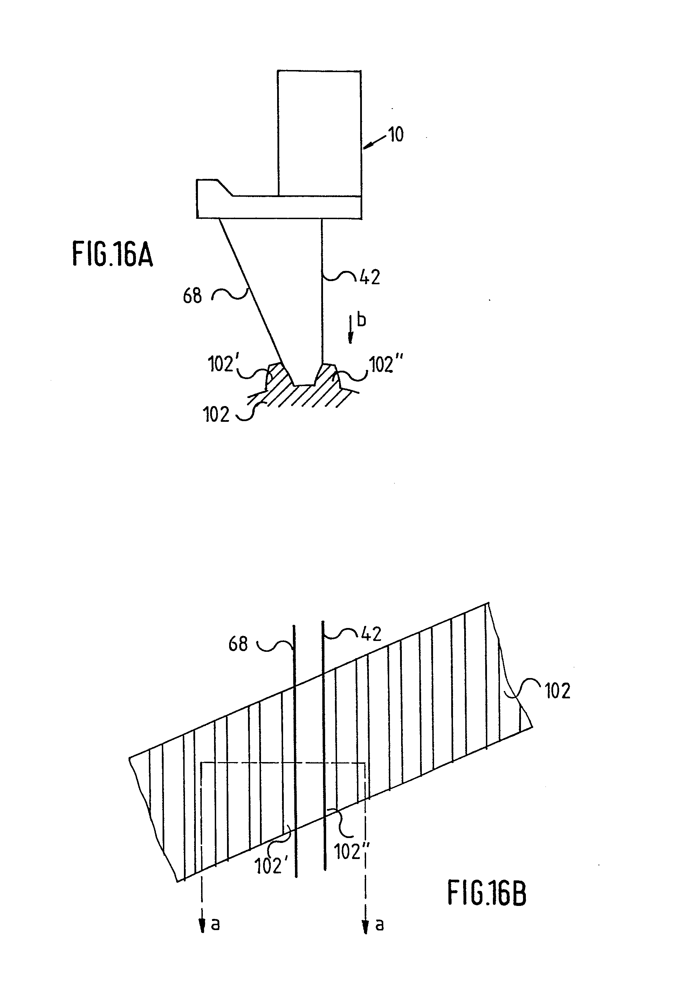

Figur 16      eine Darstellung  zum Einsatz der erfindungsgemäßen Meßvorrichtung bei der Prüfung der
              Parallelität von Zähnen eines Zahnrads, wobei
              Fig. 16a einen Schnitt entlang a - a der
              Fig. 16b und die Fig. 16b eine Sicht entlang
              des Pfeiles b der Fig. 16a zeigt;

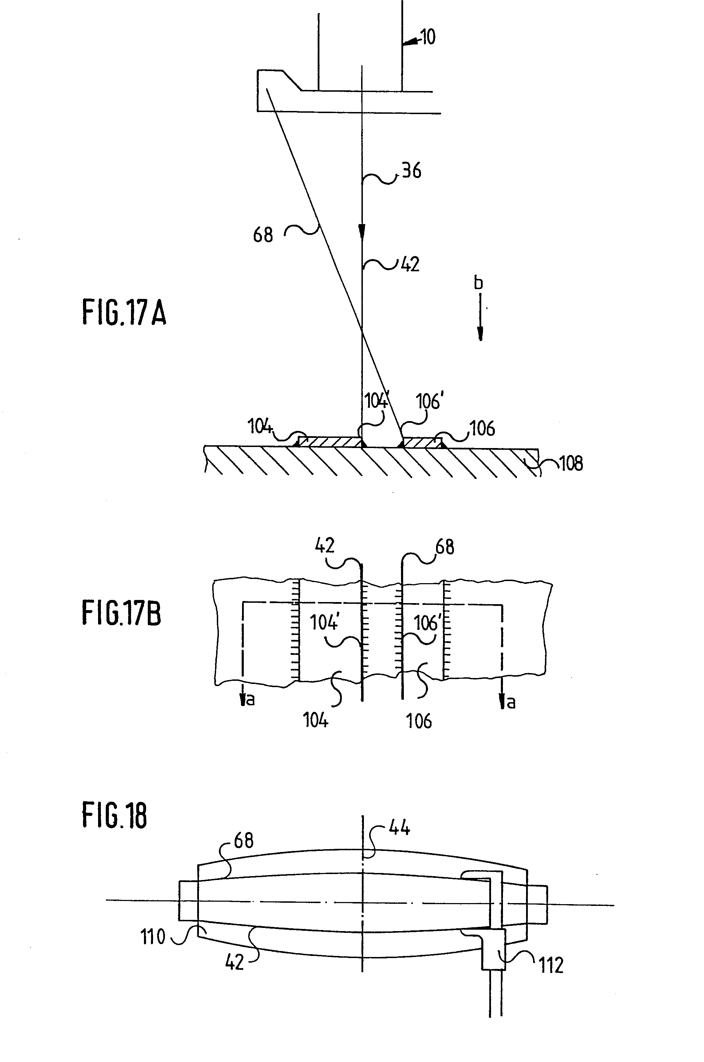

Figur 17      eine Darstellung des Einsatzes der erfindungsgemäßen Meßvorrichtung bei der parallelen
              Ausrichtung von Kanten zweier Werkstücke,
              wobei Fig. 17a einen Schnitt entlang der
              Linie a - a der Fig. 17b ist und Fig. 17b eine
              Sicht in Richtung des Pfeils b der Fig. 17a
              zeigt;

Figur 18      eine Sicht auf eine tonnenförmige Walze oder
              Welle mit auftreffenden, erfindungsgemäß erzeugten Strahlen zur Prüfung der Tonnenform
              einer solchen Walze oder Welle.

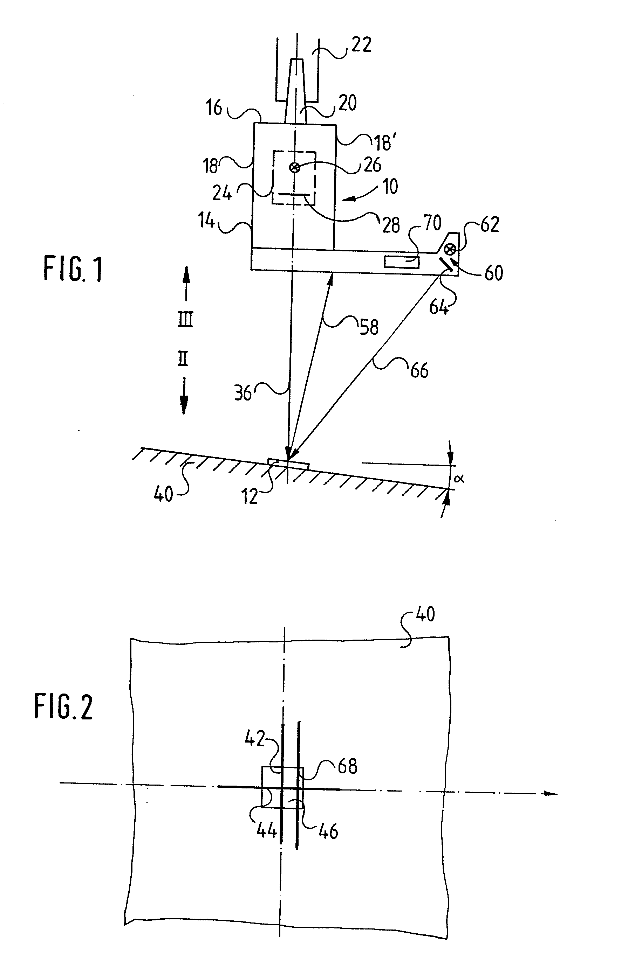

Die erfindungsgemäße Meßvorrichtung besteht nach dem in Fig. 1 dargestellten Ausführungsbeispiel aus einem Richtgerät 10 und einem Reflektoradapter 12. Das Meßgerät 10 ist in einem Gehäuse 14 untergebracht. Das Gehäuse 14 der erfindungsgemäßen Meßvorrichtung weist im dargestellten Ausführungsbeispiel senkrecht aufeinanderstehende Bezugsflächen 16, 18, 18' als Seitenwände auf. Senkrecht zur Bezugsfläche 16 erstreckt sich ein an dieser befestigter konischer Zapfen 20, mittels dessen das Richtgerät 10 im dargestellten Ausführungsbeispiel an einer Spindel 22 einer Bearbeitungsmaschine, wie einer Fräs-, Bohr-, Reibmaschine angepaßt ist.

Im Gehäuse 14 des Meßgerätes 10 ist eine Beleuchtungsanordnung 24 untergebracht, die in der Fig. 1 schematisch durch eine Lichtquelle 26 und eine Abbildungsoptik 28 angedeutet ist. Als Lichtquelle 26 kann beispielsweise ein Laser in Frage kommen; dann reichen für die Abbildungsoptik an sich Schlitze zur Festlegung von Vorzugsrichtungen aus. Es können prinzipiell auch Glühlampen mit fadenkreuzartig angeordneten Glühfäden in Frage kommen, wobei dann die Verwendung von herkömmlichen Sammellinsen zur Paralleliserung bzw. Bündelung des ausgesandten Lichtes vorteilhaft ist.

Eine eng begrenzte Lichtfläche oder ein Lichtvorhang in einer bevorzugten Ebene, entsprechend einer Vorzugsrichtung des ausgesendeten Lichtes kann insbesondere dadurch erzeugt werden, daß ein eng begrenzter Laserstrahl mit hoher Geschwindigkeit derart abgelenkt wird, daß er eine Fläche oder Ebene durchstreicht. Zur Darstellung mehrerer Lichtflächen kann dieser Strahl so bewegt und reflektiert werden, daß er mehrere Ebenen durchstreicht. Hierzu ist gemäß in der Fig. 4 dargestellten Ausführungsform der erfinderischen Vorrichtung vorgesehen, daß im eigentlichen Richtgerät 10 ein Laser 26' als Lichtquelle vorgesehen ist. In der dargestellten Ausführungsform ist der Laserstrahl 27 zunächst nach oben gerichtet und wird über Umlenkspiegel 28', 28'' umgelenkt. Der Laserstrahl 27 tritt dann axial durch die Hohlwelle 29' eines Motors 29 entlang dessen Drehachse. Der Laserstrahl kann dabei durch einen Expander und durch Sammellinsen (im einzelnen nicht dargestellt) der Abbildungsoptik zunächst in einer gewünschten Weise aufgeweitet und dann im wesentlichen auf die Ebene eines Werkstücks o.dgl. fokussiert werden. Im Gang des Laserstrahls 27 ist unterhalb des Motors 29 ein Spiegel angeordnet, der mit der Welle 29' des Motors 29 verbunden ist und durch diese um die Achse des Motors 29 gedreht wird. Der Spiegel weist zur Strahlrichtung 27 einen Winkel von 45$^{\circ}$ auf, so daß er, wenn er durch den Motor 29 gedreht wird, den von ihm reflektierten Teil 27' des Laserstrahls 27 in einer horizontalen Ebene umlaufen läßt. Der umlaufende Teil 27 des Laserstrahls trifft dabei auf zwei in senkrechten Richtungen zueinander angeordnete Ablenkspiegel 32, 33 (vergl. Fig. 4b) die den Strahl wieder um 90$^{\circ}$ umlenken und aus dem Richtgerät 10 hinausstrahlen. Beim Überstreichen jedes Spiegels 32, 33 wird der Laserstrahl von diesen Spiegeln derart reflektiert, daß er sukzessive die in der Fig. 5a dargestellten Lichtflächen 72, 74 durchstreicht.

In einem größeren Abstand zum Spiegel 31 ist ein weiterer Spiegel 34 angeordnet, der den Laserstrahl 37 beim Auftreten in den Einstellstrahl 66 reflektiert, der die Lichtfläche 76 überstreicht (vergl. Fig. 5a).

Erfindungsgemäß wird auf ein Werkstück 40 ein fadenkreuzartiger Lichtstrahl 42, 44 mit den beiden senkrecht zueinander stehenden Strahlkomponenten 42 und 44 projiziert. Dieser Strahl 42, 44 wird durch eine reflektierende Fläche auf dem Werkstück 40, beispielsweise auf einen aufgesetzten Reflektoradapter 46 mit einer spiegelnden Reflektionsfläche 46 reflektiert und kann dann zum Ausrichten verwendet werden. Zusätzlich ist neben der reflektierenden Fläche 46 eine Mattzone 47 vorgesehen, mittels derer die Auftrefflinien des Lichtstrahls 42, 44 auf dem Reflektoradapter festgestellt werden können.

Sollten lediglich Werstückflächen derart ausgerichtet werden, daß sie senkrecht zur Strahlrichtung der Meßvorrichtung liegen, so reicht es in der Verlängerung der Strahlerstreckungen oder Komponenten 42, 44 auf der Unterseite 48 des Meßgeräts 10 Fotodetektoren 52 bzw. 54 entsprechend in Form von Fotodioden z.B. den Strahlkomponenten 42 bzw. 44 anzuordnen.

Sollen aber Werkstücke auch unter einem Winkel ungleich 0° oder 90° relativ zur Strahlrichtung angeordnet werden, so müssen weitere Empfängerpunkte 56 oder -Detektoren vorgesehen sein, um den abgelenkten reflektierten Strahl 58 aufnehmen zu können. Diese Lichtempfänger 56 sollen dabei jeweils einem bestimmten Ablenkungswinkel $\alpha$ des Reflektionsstrahles 58 zugeordnet sein. Um eine definierte Beziehung zwischen Winkelablenkung des Reflektionsstrahles 58 und Abstand der jeweils von diesem Strahl getroffenen Fotodiode 56 von der Empfängeranordnung 52 zu erzielen, muß dabei die Entfernung des Meßgerätes 10 von der Oberfläche des zu bearbeitenden Werkstückes 40 einen bestimmten Wert aufweisen. Um diese Entfernung immer genau einstellen zu können, ist bei der Ausführungsform nach der Fig. 1 eine weitere Beleuchtungsanordnung 60 mit einer Lichtquelle 62 und einer Abbildungsoptik 64 vorgesehen. Durch die Beleuchtungsanordnung 60 wird ein Einstellstrahl 66 erzeugt, der ebenfalls in einer Erstreckungsrichtung 68, die im dargestellten Ausführungsbeispiel (Fig. 2) parallel zur Strahlkomponente 42 liegt, im Auftreffpunkt auf einen Gegenstand eine endliche Ausdehnung aufweist, aber in der hierzu senkrechten Richtung (parallel zu 44) beliebig schmal ist. Der Einstellstrahl 66 weist also auch eine einem Lichtvorhang oder einer Lichtfläche 76 ähnliche Ausgestaltung (vergl. Fig. 5) auf. Der Einstellstrahl 66 ist nun derart zur Strahlrichtung 36 der Strahlkomponente 42 geneigt, daß er bei einer bestimmten Entfernung des Richtgerätes 10 von der Auftrefffläche auf dieser mit diesem zusammenfällt, wie dies bei der Fig. 1 der Fall ist. Bei der Aufsicht der Fig. 2 ist das Richtgerät 10, das die in Fig. 2 dargestellte Abbildung erzeugt, zu weit von dieser Fläche entfernt, da die Auftrefflinie 68 des Einstellstrahls 66 in endlicher Entfernung zur Auftrefflinie 42' der Strahlkomponente 42 liegt. Bei dieser Stellung kann also keine ordentliche Winkelmessung vorgenommen werden, hierzu müssen zunächst die Auftrefflinien 42', 68 zur Übereinstimmung gebracht werden, wie dies der Fig. 1 entspricht. Hierzu dient als Hilfsmittel die Mattzone 47 auf der aufgrund diffuser Lichtstreuung die Auftrefflinien der Strahlen leicht gesehen werden können. Der Winkel des Reflektionsstrahles 58 wird auf eine Anzeigeeinrichtung 70, wie sie in Fig. 1 angedeutet ist, angegeben.

Durch die erfindungsgemäße Meßvorrichtung mit ihren Beleuchtungsanordnungen 24, 60 werden die in der Fig. 5 dargestellten Lichtstrahlen in Form von Lichtflächen oder Lichtvorhängen 72, 74 und 76 erzeugt.
(vergl. Fig. 5). Die Lichtflächen 72 und 74 stehen dabei im dargestellten Ausführungsbeispiel senkrecht zueinander, haben aber gleiche
Strahlrichtung 36. Die Lichtfläche 76 bildet einen Winkel zu einer der
Lichtflächen 72, 74 und steht zu der anderen ebenfalls senkrecht.

Soll nun eine Oberfläche 41 eines Werkstücks 40 senkrecht zur Strahlrichtung 36, die durch die Schnittlinie der Lichtflächen 72 und 74 gebildet wird, ausgerichtet werden, so ist die Lichtfläche 76 nicht unabdingbar, so daß sie im folgenden außerhalb der Betrachtung bleibt.
Die Lichtflächen 72, 74 treffen in einem Kreuzmuster 42', 44' auf der
/ auf der
Oberfläche 41 des Werkstückes 40 aufgesetzten Reflektionsfläche 46
auf und werden von dieser reflektiert (vergl. Fig. 5b und·Fig. 6). Wenn
die Oberfläche 41 nicht senkrecht zur Strahlrichtung 36 steht, fallen die
reflektierten Lichtflächen 72', 74' nicht mit den Ausgangslichtflächen
72, 74 zusammen, sondern weichen vielmehr in ihrer Ausrichtung von
diesen ab, wie es in Fig. 6 dargestellt ist. Es ist dann notwendig, das
Werkstück 40 so lange auszurichten, bis die reflektierten Strahlflächen
72', 74' mit den Ausgangsstrahlflächen 72, 74 zusammenfallen, also
damit senkrecht durch die Spiegelfläche 46 reflektiert werden. Dieses
Zusammenfallen kann festgestellt werden, indem in den durch die
Strahlflächen 72, 74 bestimmten Ebenen an der Unterseite des Meßgerätes die Fotodioden 52, 54 angebracht sind. Werden alle Fotodioden 52, 54 von reflektiertem Licht getroffen, so liegt eine senkrechte Ausrichtung vor. Dies kann beispielsweise durch Leuchtdioden
angezeigt werden, die aufleuchten, wenn eine Fotodiode 52, 54 von
reflektiertem Licht getroffen wird. Soll eine Neigung der Oberfläche
41 des Werkstückes 40 relativ zum Ausgangsstrahl 42, 44 eingestellt
werden, so ist mit der dargestellten Meßvorrichtung eine solche Einstellung nur mit einer Fallinie des Werkstückes in Richtung der Lichtfläche 74 möglich. Bei einem solchen Ausrichtvorgang wird zunächst das Werkstück derart ausgerichtet, daß die Lichtfläche 74 senkrecht durch die Lichtfläche 74' reflektiert wird, so daß Licht der Lichtfläche 74' in die Fotodioden 54 fällt. Vorher oder anschließend muß die Entfernung des Meßgerätes den relativ zum Auftreffpunkt des Lichtstrahls 36 auf der Werkstückoberfläche eingestellt werden. Hierzu dient der Einstellstrahl 66. Die Entfernung wird derart eingestellt, daß die Lichtfläche 76 auf der Oberfläche des Spiegels 46 mit der Lichtfläche 72 in einer Linie zusammentrifft. In diesem Falle ist dann die Entfernung derart eingestellt, daß die Fotodioden 56 bei Auftreffen des reflektierten Strahles 58 den Neigungswinkel $\alpha$ des Werkstückes relativ zu einer Ausrichtung senkrecht zum Ausgangsstrahl 36 direkt richtig anzeigen. Statt der Fotodioden 56 können auch lineare Fotoelement-Matrizen vorgesehen sein, die dann bei größerem Ablenkwinkel bei dem in Fig. 1 dargestellten Ausführungsbeispiel der Meßvorrichtung eine höhere Genauigkeit bedingen.

Im folgenden werden zunächst unter Bezugnahme auf die Fig. 7 bis 11 weitere Einsatzmöglichkeiten einer erfindungsgemäßen Meßvorrichtung erläutert. Die in Fig. 7 dargestellte Meßvorrichtung mit einem Meßgerät 10, das eine geringere horizontale Erstreckung als das Meßgerät 10 der Fig. 1 aufweist, dient lediglich zur Einstellung kleinerer Winkel bzw. zur senkrechten Ausrichtung einer Werkstückoberfläche 41 relativ zum Meßstrahl 36. Das Meßgerät 10 in Fig. 7 ist über einen konusförmigen Zapfen 20 an einer Spindel 22, beispielsweise einer Fräs-, Bohr-, oder entsprechenden Maschine angeordnet. Neben der im rechten Teil der Fig. 7 dargestellten und unter Bezugnahme auf die vorherigen Figuren erläuterten Einsatzweise kann beispielsweise auch eine Einstellung eines Werkstückes derart vorgenommen werden, daß eine - nicht zu bearbeitende, gegebenenfalls schon bearbeitete - Werkstückoberfläche 41' parallel zur Strahlrichtung 36 ausgerichtet wird. Hierzu wird an dieser Seitenfläche 41' ein Spiegel derart angebracht, daß er eine sich senkrecht zur Seitenfläche 41' erstreckende Reflektionsfläche 46 hat. Das Meßgerät 10 wird dann senkrecht über der Reflektionsfläche 46 verfahren und die Ausrichtung vorgenommen.

In Fig. 8 ist der Einsatz einer Meßvorrichtung an einer Drehmaschine vorgesehen. Das Meßgerät 10 wird über einen angesetzten konusförmigen Zapfen 20 im Reitstock 80 einer Drehmaschine eingespannt. Der Meßstrahl 36 ist auf das im Spannfutter 82 eingespannte Werkstück 40 gerichtet. Die Oberfläche 41 des Werkstückes 40 wird dann mittels der Reflektionsfläche 46 so ausgerichtet, daß sie senkrecht zur Strahlrichtung 36 steht, in dem dafür gesorgt wird, daß der reflektierte Strahl mit der Strahlrichtung 36 zusammenfällt.

Die Fig. 9 zeigt eine Karusseldrehmaschine, bei der das Werkstück 46 auf Planlauf ausgerichtet wird. Das Werkstück 46 ist dabei auf einem Werktisch 86 aufgelegt und das Richtgerät 10 ist am Querbalken 88 angebracht, der von zwei Ständern 90 gehalten wird.

Das Werkstück 46 wird dabei wieder so ausgerichtet, daß ein von seiner Oberfläche 41 reflektierter Strahl mit der Strahlrichtung 36 zusammenfällt.

In der Fig. 10 schließlich ist die Nachkontrolle der Winkligkeit oder Parallelität des Werkstückes 40 dargestellt, indem wiederum auf der Oberfläche 41 eine Reflektorfläche 46 angeordnet ist, die den Ausgangsmeßstrahl 36 des Richtgerätes 10 in sich reflektieren soll, um so das Werkstück 40 zu kontrollieren.

Soweit die Oberfläche 41 eines Werkstückes 40 nicht selbst reflektierend ist, kommt es darauf an, daß die aufgelegte Reflektionsfläche
46 tatsächlich exakt auf der Werkstückoberfläche 41 aufsitzt und
daher deren Ausrichtung genau reproduziert bzw. unter einer
definierten Beziehung überträgt.

In der Fig. 11 ist daher eine bevorzugte Ausführungsform des Spiegel-
oder Reflektionsadapters 12 dargestellt, wobei dieser eine Dreipunktauflage 89 mit den drei Auflagepunkten 90 aufweist. Mittels des Spiegeladapters der Fig. 12 kann die Werkstückoberfläche 41 beispielsweise
exakt senkrecht zur Strahlrichtung 36 ausgerichtet werden.

In der Fig. 12 ist ein Reflektoradapter 12 mit Dreipunktauflage 89
oder Magnet dargestellt, der ebenfalls drei Auflagepunkte 90 aufweist.
Hier ist die Reflektionsfläche 46 am Adapter 12 an einem Schenkel 92
so ausgerichtet, daß sie mit ihrer Oberfläche genau senkrecht zur
Oberfläche 41 des Werkstückes 40 steht. Mittels dieses Reflektoradapters 12 erfolgt also eine Ausrichtung des Werkstückes bzw.
der Werkstückoberfläche 41 parallel zur Strahlrichtung 36.

Die Fig. 13 zeigt einen der Fig. 12 entsprechenden Reflektionsadapter
12, bei dem allerdings die Auflagefläche durch eine Prismenhalterung
94 gebildet ist.

Hier erfolgt eine Ausrichtung der Werkstückoberfläche, auf der die Prismenhalterung 94 aufsitzt, parallel zur Strahlrichtung 36. Es könnte ebenfalls ein Reflektionsadapter mit einer Prismenhalterung 94 vorgesehen
sein, der ansonsten wie der Gegenstand der Fig. 11 ausgebildet ist.

In besonderen Fällen kann es sinnvoll sein, die Spindel einer Drehbank, Fräsmaschine od. dgl. auszurichten. In einem solchen Falle kann der Reflektionsadapter 12 einen konusförmigen Ansatz 96 aufweisen. Der Reflektionsadapter 12 wird in der Spindel 98 eingespannt und dann gemeinsam mit dieser derart ausgerichtet ist, daß der reflektierte Strahl entlang der Ausgangsstrahlrichtung 36 zurückläuft.

Sollen wiederholt Werkstücke mit einer Oberfläche unter einem bestimmten vorgegebenen Winkel abweichend von $90^{\circ}$ zur Strahlrichtung 36 des Meßstrahls einer in vorgegebener Weise eingespannten Meßgerätes ausgerichtet werden, so ist es vorteilhaft als Reflektoradapter 12 einen kalibrierten Keil 46' mit einer definierten Neigung vorzusehen, durch den erreicht wird, daß der reflektierte Strahl entlang der Strahlrichtung 36 zurückläuft. In diesem Falle kann dann auf eine besondere Winkelmessung, wie sie bei dem Meßgerät nach der Fig. 1 durch die Fotodioden 56 vorgenommen wird, verzichtet werden. Es reichen dann lediglich die Fotodioden 52 und 54, um eine Ausrichtung zu erzielen.

Das erfindungsgemäße Verfahren und die erfindungsgemäße Vorrichtung können in der Ausgestaltung mit einem zusätzlichen Einstellstrahl 66 (vergl. Fig. 1 und 2), dessen Erstreckungsrichtung 68 parallel zu einer Erstreckungsrichtung oder Strahlkomponente 42, 44, in der Fig. 2 zu der Strahlkomponente 42, ausgerichtet ist, zur Messung und Überprüfung von Parallelitäten von oder an Werkstücken oder auch zylindrischer oder tonnenförmiger Ausgestaltungen von Walzen oder Wellen eingesetzt werden. Entsprechende Beispiele sind in den Figuren 16 bis 18 veranschaulicht. Die Fig. 16a zeigt eine Seitenansicht des erfindungsgemäßen Richtgerätes 10 mit dem Ausschnitt eines darunter angeordneten Zahnrads 102 mit zwei Zähnen 102' und 102''. Die Fig. 16b zeigt eine Aufsicht entlang des Pfeiles b der Fig. 16a. Wenn der jeweilige Gegenstand oder ein Werkstück, hier also das Zahnrad 102 in einer anderen Entfernung zum Meßgerät 10 gebracht wird, so fallen die Erstreckungsrichtungen oder Strahlkomponenten 42 und 68 nicht auf der Oberfläche des Gegenstandes zusammen, sondern erstrecken sich vielmehr in einem gewissen, vom Relativabstand zwischen Werkstück und Meßgerät abhängigen Abstand parallel zueinander, soweit die Auftrefflächen oder Kanten senkrecht zur Strahlrichtung 36 stehen. Aus der Fig. 16 ist nun ersichtlich, wie in dieser Weise, mittels der parallelen Er streckungsrichtung 42, 66 festgestellt werden kann, ob die Kanten der Zähne 102' und 102'' parallel zueinander verlaufen.

Gemäß der Fig. 17 sollen zwei Werkstücke 104 und 106 auf einer Ebene 108, die senkrecht zur Strahlrichtung 36 ausgerichtet ist, mit zwei Kanten 104' und 106' parallel zueinander ausgerichtet werden. Auch dies ist aufgrund der parallelen Auftrefflinien 42 und 68 der Strahlen möglich.

In der Fig. 18 ist eine Abbildung der vom Gerät 10 ausgesandten Strahlen auf einer tonnenförmigen Walze 110 dargestellt, die mit ihrer Achse sowohl senkrecht zur Strahlrichtung 36 (im einzelnen nicht dargestellt, entspricht aber senkrechter Blickrichtung) als auch zur Strahlkomponente 44 ausgerichtet ist. Die Auftrefflinien der Teilstrahlen 42 und 68 nähern sich dabei entsprechend der Verdünnung der Walzenform. Mittels einer Schieblehre 112 kann dann geprüft werden, ob der Abstand jeweils einem vorgegebenen Wert entspricht.

In der vorstehenden Beschreibung, in der Zeichnung sowie in den Ansprüchen offenbarte Merkmale der Erfindung können sowohl einzeln als auch in beliebigen Kombinationen für die Verwirklichung der Erfindung in ihren verschiedenen Ausführungsformen wesentlich sein.

PATENTANSPRÜCHE

1. Verfahren zum Richten und Prüfen von Werkstücken od. dgl., insbesondere in einer Bearbeitungsmaschine, wie Dreh- und Fräsmaschinen od. dgl., wobei mindestens ein Lichtstrahl auf eine Fläche eines Werkstücks gerichtet und von dieser direkt oder durch eine mit diesem verbundenen Reflektor reflektiert wird, dadurch gekennzeichnet, daß ein erster Lichtstrahl senkrecht zu einer Strahlrichtung durch mindestens zwei Vorzugsrichtungen strukturiert wird.

2. Verfahren nach Anspruch 1, dadurch gekennzeichnet, daß der Lichtstrahl durch zwei sich entlang der Strahlrichtung schneidende Lichtflächen gebildet wird.

3. Verfahren nach Anspruch 1 oder 2, dadurch gekennzeichnet, daß die Vorzugsrichtungen zueinander senkrecht ausgerichtet sind.

4. Verfahren nach einem der vorangehenden Ansprüche, dadurch gekennzeichnet, daß ein zweiter Lichtstrahl von einem zum ersten Lichtstrahl entfernt liegenden Ort unter einer senkrecht zu einer Vorzugsrichtung des ersten Lichtstrahls und schräg zu diesem hin gerichteten Strahlrichtung gestrahlt wird.

5. Verfahren nach Anspruch 4, dadurch gekennzeichnet, daß der zweite Lichtstrahl ebenfalls eine parallel zur genannten Vorzugsrichtung sich erstreckende Vorzugsrichtung aufweist.

6. Verfahren nach Anspruch 5, dadurch gekennzeichnet, daß der Strahl ebenfalls als Lichtfläche ausgebildet ist.

7. Verfahren nach Anspruch 2 oder 6, dadurch gekennzeichnet, daß die Lichtflächen durch einen sie mit hoher Geschwindigkeit überstreichenden, eng gebündelten Lichtstrahl erzeugt werden.

8. Verfahren nach Anspruch 7, dadurch gekennzeichnet, daß durch Überstreichen des Lichtstrahls von mit Neigung zur Fläche des Werkstücks ausgerichteten Spiegeln die Lichtflächen erzeugt werden.

9. Verfahren nach Anspruch 8, dadurch gekennzeichnet, daß zwei zueinander senkrecht stehende Lichtflächen durch in einer Ebene des kreisenden Lichtstrahls in einem rechten Winkel zum Zentrum des kreisenden Lichtstrahls zueinander angeordnete Spiegel gebildet werden.

10. Vorrichtung zum Richten und Prüfen von Werkstücken o.dgl., insbesondere in einer Bearbeitungsmaschine, wie Dreh- und Fräsmaschinen od. dgl., insbesondere zur Durchführung des Verfahrens nach einem der vorangehenden Ansprüche, gekennzeichnet durch ein kompaktes Richtgerät (10) mit mindestens einer äußeren Bezugsfläche (16, 18) mit mindestens einer einen scharf gebündelten Meßstrahl (42, 44) erzeugenden Beleuchtungsanordnung (24) mit einer Lichtquelle (26), deren Strahlrichtung (36) eine vorbestimmte Ausrichtung relativ zu den Bezugsflächen (16, 18) aufweist, wobei der Meßstrahl (42, 44) senkrecht zu seiner Strahlrichtung (36) durch mindestens zwei Vorzugsrichtungen strukturiert ist, und mit entsprechend den Vorzugsrichtungen angeordneten Meßelementen (52, 54) und durch mindestens eine an Meßflächen (41) des Werkstücks angeordnete Reflektionsflächen (46) zum Reflektieren des vom Richtgerät ausgesandten Meßstrahls (42, 44).

11. Vorrichtung nach Anspruch 10, dadurch gekennzeichnet, daß die Beleuchtungsanordnung (24) einen Laser (26') als Lichtquelle (26) aufweist.

12. Vorrichtung nach Anspruch 11, dadurch gekennzeichnet, daß im Meßgerät im Lichtweg des Lasers (26') mit Neigung zum Strahl (27, 27') des Lasers (26') ein drehbarer Spiegel (31) angeordnet ist, dessen Drehachse mit dem Strahl (27') zusammenfällt, daß der Spiegel mit einem Motor (29) verbunden ist und daß um den Spiegel (31) mindestens ein weiterer Spiegel (32, 33, 34) angeordnet ist, der den durch den bewegten Spiegel umlaufenden Lichtstrahl in mindestens einer Lichtfläche (72, 74, 76) aus dem Gerät heraus reflektiert.

13. Vorrichtung nach Anspruch 12, dadurch gekennzeichnet, daß um den sich drehenden Spiegel (31) in der Ebene des umlaufenden Lichtstrahls mindestens ein mit Neigung zur Fläche des Werkstücks ausgerichteter Spiegel (32, 33, 34) angeordnet ist.

14. Vorrichtung nach Anspruch 13, dadurch gekennzeichnet, daß zur Erzeugung zweier sich rechtwinklig schneidender Lichtflächen zwei Spiegel (32, 34) in Richtungen unter einem Winkel von 90°C um den sich drehenden Spiegel (31) angeordnet ist.

15. Vorrichtung nach Anspruch 13, oder 14, dadurch gekennzeichnet, daß gegenüber einem der Spiegeln (32) in größerer Entfernung vom sich drehenden Spiegel (31) ein Spiegel (34) mit einer stärkeren Neigung zur Werkstückfläche hin angeordnet ist.

16. Vorrichtung nach Anspruch 10 oder 11, dadurch gekennzeichnet, daß die Beleuchtungsanordnung (24) Lichtleiter, die von der Lichtquelle (26) ausgehen und in fadenkreuzartiger Anordnung enden und eine Abbildungsoptik aufweist.

17. Vorrichtung nach einem der Ansprüche 10 bis 16, dadurch gekennzeichnet, daß die Meßelemente als ablesbare Markierungen vorgesehen sind.

18. Vorrichtung nach einem der Ansprüche 10 bis 17, dadurch gekennzeichnet, daß die Meßelemente Fotodetektoren (52, 54) sind.

19. Vorrichtung nach einem der Ansprüche 10 bis 18, dadurch gekennzeichnet, daß die Beleuchtungsanordnung (24) halbdurchlässige Spiegel aufweist.

20. Vorrichtung nach Anspruch 19, dadurch gekennzeichnet, daß die Meßstrahlen (42, 44) voll parallelisiert sind und derart Lichtflächen bilden.

21. Vorrichtung nach einem der Ansprüche 11 bis 19, dadurch gekennzeichnet, daß die Meßstrahlen (42, 44) in durch Strahlrichtung (36) und Vorzugsrichtungen definierten Lichtflächen (72, 74) leicht divergent verlaufen, ansonsten, insbesondere senkrecht zu den Lichtflächen (72, 74) im wesentlichen parallelisiert sind.

22. Vorrichtung nach einem der Ansprüche 10 bis 21, dadurch gekennzeichnet, daß die Bezugsflächen (16, 18) durch Außenwände eines Gehäuses (14) gebildet sind.

23. Vorrichtung nach einem der Ansprüche 10 bis 22, dadurch gekennzeichnet, daß die Bezugsflächen (16, 18) als Anlageebenen ausgebildet sind.

24. Vorrichtung nach einem der Ansprüche 10 bis 23, dadurch gekennzeichnet, daß mindestens eine Bezugsfläche (16) senkrecht zur Strahlrichtung (36) steht.

25. Vorrichtung nach einem der Ansprüche 10 bis 24, dadurch gekennzeichnet, daß bei mehreren Bezugsflächen (16, 18) diese senkrecht zueinander stehen.

26. Vorrichtung nach einem der Ansprüche 10 bis 25, dadurch gekennzeichnet, daß Festlegungsmittel (20) vorgesehen sind, die eine zur Strahlrichtung (36) definierte Ausrichtung des Richtgerätes (10) erlauben.

27. Vorrichtung nach einem der Ansprüche 24 bis 26, gekennzeichnet durch einen senkrecht zu einer Bezugsfläche (16) stehenden Zapfen (20).

28. Vorrichtung nach Anspruch 27, dadurch gekennzeichnet, daß der Zapfen (20) konusförmig ausgebildet ist.

29. Vorrichtung nach Anspruch 27 oder 28, dadurch gekennzeichnet, daß der Zapfen (20) fest mit der zugeordneten Bezugsfläche (16) verbunden ist.

30. Vorrichtung nach Anspruch 27 oder 28, dadurch gekennzeichnet, daß der Zapfen (20) abnehmbar durch Befestigungsmittel angebracht ist.

31. Vorrichtung nach einem der Ansprüche 10 bis 30, gekennzeichnet durch eine weitere, in räumlichem Abstand zur ersten angeordneten Beleuchtungsanordnung (60), mittels der ein Einstellstrahl (66) unter einem endlichen Winkel zum Meßstrahl (42,44) hin gerichtet wird.

32. Vorrichtung nach Anspruch 31, dadurch gekennzeichnet, daß zusätzliche Fotodetektoren (56) zwischen erster und zweiter Beleuchtungsanordnung (24, 60) vorgesehen sind.

33. Vorrichtung nach Anspruch 31, dadurch gekennzeichnet, daß bewegliche Photodetektoren vorgesehen sind, deren Stellung feststellbar ist.

34. Vorrichtung nach Anspruch 31, dadurch gekennzeichnet, daß die Beleuchtungsanordnung (60) eine separate Lichtquelle (62) aufweist.

35. Vorrichtung nach Anspruch 31, dadurch gekennzeichnet, daß die Beleuchtungsanordnung (60) eine optische Umlenkeinrichtung aufweist, mittels der ein Teil des Lichts der Ausgangslichtquelle (26) abgelenkt wird.

36. Vorrichtung nach Anspruch 35, dadurch gekennzeichnet, daß die Umlenkeinrichtung Lichtleiter aufweist.

37. Vorrichtung nach Anspruch 35 oder 36, dadurch gekennzeichnet, daß die Umlenkeinrichtung Spiegel aufweist.

38. Vorrichtung nach einem der Ansprüche 35 bis 37, dadurch gekennzeichnet, daß die Umlenkeinrichtung Prismen aufweist.

39. Vorrichtung nach einem der Ansprüche 31 bis 38, dadurch gekennzeichnet, daß der Strahl (66) ebenfalls eine Vorzugsrichtung senkrecht zu seiner Strahlungsrichtung aufweist, und daß die Vorzugsrichtung sich parallel zu einer Vorzugsrichtung des Meßstrahls (42, 44) erstreckt.

40. Vorrichtung nach einem der Ansprüche 31 bis 39, dadurch gekennzeichnet, daß der Einstellhilfsstrahl (66) in zu einer Vorzugsrichtung senkrechter Richtung parallelisiert ist und derart eine Lichtfläche bildet.

41. Vorrichtung nach einem der Ansprüche 31 bis 40, dadurch gekennzeichnet, daß die Beleuchtungsanordnung (60) eine Abbildungsoptik (64) mit einer Spaltblende aufweist, die sich parallel zu einer Vorzugsrichtung, vorzugsweise der Vorzugsrichtung des Anspruchs (31) erstreckt.

42. Vorrichtung nach einem der Ansprüche 31 bis 41, dadurch gekennzeichnet, daß die zusätzliche Beleuchtungsanordnung (60) gegebenenfalls mit den zusätzlichen Fotodetektoren (56) in einem entfernbaren Zusatzteil des Richtgerätes (10) angeordnet ist.

43. Vorrichtung nach einem der Ansprüche 10 bis 42, gekennzeichnet durch einen separat ansetzbaren Reflektoradapter (12).

44. Vorrichtung nach Anspruch 43, dadurch gekennzeichnet, daß der Reflektoradapter (12) neben der Reflektionsfläche (46) eine Mattzone (47) aufweist.

FIG.1

FIG.2

FIG.3

FIG.4A

FIG.4B

FIG.5A

FIG.5B

74' 72'

41

46 47

40

FIG.6

74' 72'

FIG.7

FIG.8

FIG.9

FIG.10

FIG.11

FIG.12

FIG.13A

FIG.13B

FIG.14

FIG.15

FIG.16A

FIG.16B

FIG.17A

FIG.17B

FIG.18